# EUROPÄISCHE PATENTSCHRIFT

(11) **EP 2 477 786 B1**
(45) Veröffentlichungstag und Bekanntmachung des Hinweises auf die Patenterteilung: **21.08.2013**
(21) Anmeldenummer: 10754881.0
(22) Anmeldetag: 14.09.2010
(51) Int. Cl.: B23Q 1/01, B23Q 11/00

(54) **WERKZEUGMASCHINE**
MACHINE TOOL
MACHINE-OUTIL

(30) Priorität: 15.09.2009 DE 102009041596
(43) Veröffentlichungstag der Anmeldung: 25.07.2012
(73) Patentinhaber: Deckel Maho Seebach GmbH, 99846 Seebach (DE)
(72) Erfinder: TÜLLMANN, Udo, 99817 Eisenach (DE)
(74) Vertreter: Beetz & Partner
(86) Internationale Anmeldenummer: PCT/EP2010/005643
(87) Internationale Veröffentlichungsnummer: WO 2011/032682

(56) Entgegenhaltungen:
- EP-A1- 0 452 735
- EP-A1- 2 191 933
- EP-A2- 1 287 945

## Beschreibung

Die Erfindung betrifft eine Werkzeugmaschine zur spanenden Bearbeitung von Werkstücken mit einem formsteifen Maschinenbett, mit einem am Maschinenbett horizontal verfahrbaren Fahrständer, mit einer am Fahrständer verfahrbar montierten Bearbeitungseinheit mit mindestens einem einwechselbaren Spanwerkzeug und mit einer an der vorderen Längsseite des Maschinenbetts vorgesehenen Tragko n-struktion zur Aufnahme und Halterung mindestens eines Werkstücks (siche, z.B., EP-0452735).

Zur spanenden Bearbeitung von Werkstücken großer Längsabmessungen werden Werkzeugmaschinen eingesetzt, deren Maschine n-ständer als sog. Fahrständer auf einem i.d.R. flachen langgestreckten Maschinenbett in Längsrichtung motorisch verfahrbar ist. Als Antriebseinheit für die Fahrbewegungen des Fahrständers dienen in neuerer Zeit meist elektrische Linearmotoren, die gegenüber he r-kömmlichen elektromechanischen oder fluidischen Antriebssystemen Vorteile hinsichtlich Beschleunigung, Genauigkeit, Kosten, etc., haben. An der vorderen Längsseite des Maschinenbetts ist bei diesen Werkzeugmaschinen eine Tragkonstruktion vorgesehen, auf welcher ein oder auch mehrere der zu bearbeitenden Werkstücke großer Längsabmessungen aufgespannt werden können. Diese Tragko n-struktionen sind bettartig ausgeführt und zur Aufnahme von stationären oder längsverschiebbaren Werkstücktischen ausgebildet. Ein wesentlicher Nachteil derartiger Systeme besteht darin, dass sich die Späne auf den ebenen Oberflächen der Tragkonstruktion bzw. der Werkstücktische zu Haufen ansammeln und nicht automatisch entfernt werden können. Darüber hinaus sind diese bekannten Tra g-konstruktionen in ihren Variationsmöglichkeiten zur Aufnahme unterschiedlicher Werkstücke begrenzt.

Aufgabe der Erfindung ist es, eine Werkzeugmaschine zur spanenden Bearbeitung von Werkstücken zu schaffen, die für großvolumige Werkstücke mit großem Späneanfall ausgelegt ist und einen beso n-ders vorteilhaften Spänefall sowie günstige Nutzungsmöglichkeiten des Arbeitsraums ergibt.

Diese Aufgabe wird erfindungsgemäß durch eine Werkzeugmaschine nach Anspruch 1 gelöst.

Durch die Ausbildung der Tragkonstruktion als formstabiler Rahmen mit voneinander beabstandeten Längsträgern wird ein freier Zw i-schenraum zwischen den beiden Längsträgern geschaffen, durch den die bei der Bearbeitung anfallenden Späne und Flüssigkeiten hin-durchfallen und in einem geeigneten Sammler aufgefangen werden können. Daneben sind die Längsträger so angeordnet und ausgebi 1-det, dass unterschiedliche Werkstück-Trageinrichtungen, wie ortsfeste und/oder verschiebbare Werkstücktische, Werkstück-Rundtische, Wechselpaletten, vertikale Spannsysteme, usw., auf bzw. an diesen Längsträgern angeordnet werden können.

Die Längsträger des Tragrahmens können auf durchgehenden oder unterbrochenen Holmen aufliegen, welche sich direkt auf dem B odenfundament abstützen. Daneben besteht die zweckmäßige Möglichkeit, dass der Tragrahmen auf in Rahmenlängsrichtung voneinander beabstandeten Querstützen abgestützt ist, welche auf einem durchgehenden Unterbau angeordnet sind, der an der vorderen Längsseite des Maschinenbettes vorgesehen ist und eine gene igte obere Rutschfläche für Späne od. dgl. aufweist. Die voneinander beabstandeten Querstützen begrenzen zusammen mit den entspr e-chenden Abschnitten der Längsträger Freiräume, durch welche die Späne und andere Betriebsstoffe hindurchfallen können. Die schräge Oberfläche des sich auch zwischen den Querstützen erstreckenden Unterbaus ermöglicht einen weitgehend automatischen Austrag der Späne durch Schwerkraft.

Zweckmäßig haben die Längsträger ein Profil, das die einfache Mo n-tage von Führungsschienen für verfahrbare Werkstückträger sowie auch von Spanneinrichtungen zum Fixieren stationärer Werkstückträger ermöglicht.

Eine besonders hohe Formsteifigkeit der gesamten Werkzeugmasch i-ne lässt sich dadurch erreichen, dass der Unterbau für den Tragrahmen bzw. die Tragkonstruktion mit dem Tiefbett der Fahrständermaschine einteilig integriert ausgeführt ist. Daneben kann jedoch auch die sog. Duo-Block-Bauweise angewendet werden, bei welcher der bettartige Unterbau der Tragkonstruktion und das Maschinenbett jeweils als gesonderte Baueinheiten hergestellt und miteinander durch geeignete Mittel verbunden sind.

Gemäß einer vorteilhaften Ausgestaltung der Erfindung können als Werkstückaufnahmen mindestens ein Werkstücktisch auf den beiden Längsträgern des Tragrahmens fest oder verfahrbar montiert sein, was eine weitgehend ununterbrochene Bearbeitung einer Vielzahl von aufgespannten Werkstücken ermöglicht.

Gemäß einer anderen zweckmäßigen Ausgestaltung der Erfindung kann als Werkstückaufnahme mindestens eine Spannvorrichtung zum Einspannen und Drehen eines Werkstückes auf den beiden Längsträgern des Tragrahmens ortsfest oder verfahrbar montiert sein. In diese Spannvorrichtung können Werkstücke horizontal ei n-gespannt werden, wobei die Verwendung von zwei beabstandeten Spannvorrichtungen das beidendige Einspannen eines Werkstücks ermöglicht. Die Spannvorrichtung kann auch ein drehangetriebener Rundtisch mit vertikaler Aufspannplatte sein. Zweckmäßig sollten die Spannvorrichtungen mittels einer geeigneten Antriebseinheit , z.B. in Form eines Spindeltriebs, auf Führungsschienen verfahrbar sein, die an den Längsträgern montiert sind.

Eine andere zweckmäßige Weiterbildung der Erfindung zeichnet sich dadurch aus, dass unter dem Tragrahmen der Tragkonstruktion ein Sammler für Späne und andere Betriebsmittel angeordnet ist.

Im Folgenden werden Ausführungsbeispiele der Erfindung anhand der Zeichnung ausführlich beschrieben. Es zeigen:
- Fig. 1: eine Gesamtansicht eines Ausführungsbeispiels der erfindungsgemäßen Werkzeugmaschine;
- Fig. 2: den unteren Teil der Werkzeugmaschine nach Fig. 1 mit dem Maschinenbett und der Tragkonstruktion in perspektivischer Ansicht;
- Fig. 3: Ausführungsbeispiele der erfindungsgemäßen Tragkonstruktion mit mehreren Werkstücktischen in Fig. 3a und zwei Spannvorrichtungen in Fig. 3b.

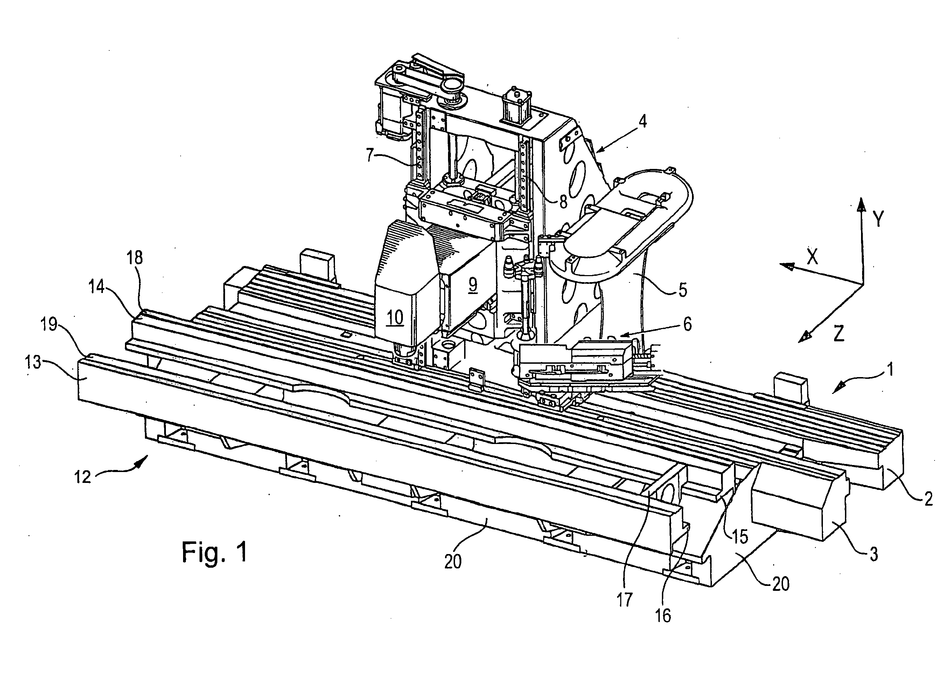

Die in Fig. 1 vollständig dargestellte Werkzeugmaschine enthält ein sich in X-Richtung längs erstreckendes flaches Maschinenbett 1, das zwei zueinander parallele Längsholme 2, 3 mit oberseitigen Führu n-gen aufweist. Auf den beiden Längsholmen 2, 3 des Maschinen-Flachbetts 1 ist ein Fahrständer 4 in Richtung der X-Achse motorisch verfahrbar, dem ein hier als horizontales Kettenmagazin ausgebildetes Werkzeugmagazin 5 mit Werkzeugwechsler 6 zugeordnet ist. An der Vorderseite des Fahrständers 4 ist in Führungsschienen 7, 8 eine Bearbeitungseinheit 9 vertikal verfahrbar geführt, die an ihrer Vor-derseite einen Fräskopf 10 mit vertikal ausgerichteter Arbeitsspindel zeigt.

An der in Z-Richtung vorderen Stirnseite des Maschinenbetts 1 ist eine erfindungsgemäß ausgebildete Tragkonstruktion 12 angeordnet, die im Folgenden ausführlicher beschrieben wird. Diese Tragkonstruktion weist zwei Längsträger 13, 14 auf, die sich in X-Koordinatenrichtung mit einem vorgegebenen Querabstand erstrecken und auf diese Weise einen mittleren langgestreckten Freiraum 15 beidse i-tig begrenzen. Beide Längsträger 13, 14 haben ein Querschnittsprofil mit jeweils einem innenseitigen horizontalen Längssteg 15, 16, die als beidseitige Auflagen und Führungsschienen z.B. für Querstücke 17 dienen. Beide Längsträger 13, 14 haben vertikale Außenflächen und ihre Oberflächen 18, 19 erstrecken sich bei dem dargestellten Au s-führungsbeispiel in der gleichen horizontalen Ebene.

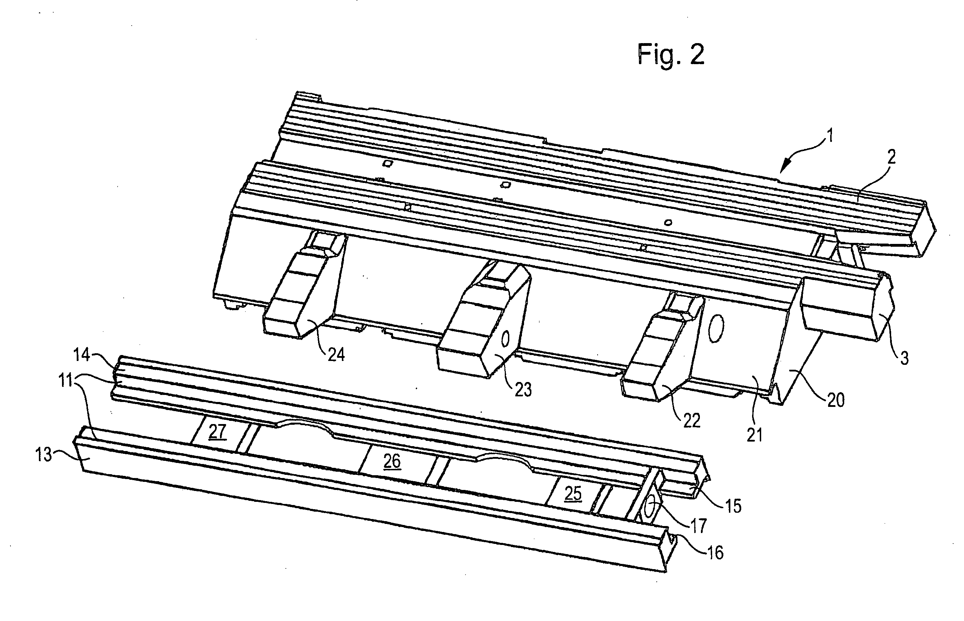

Ebenfalls an der vorderen Längsseite des Bettes 1 ist ein form steifer Unterbau vorgesehen, der mit den beiden Längsholmen 2, 3 des Be t-tes 1 einstückig ausgebildet oder auch als gesonderte Baugruppe mit den beiden Längsholmen 2, 3 fest verbunden sein kann. Dieser U n-terbau 20 weist an seiner Vorderseite eine sich über seine gesamte Länge erstreckende Schrägfläche 21 auf, die als eine Rutschfläche für im Spanbetrieb anfallende Feststoffe und Flüssigkeiten dient. Wie aus Fig. 2 ersichtlich, sind ferner an der schrägen Vorderseite des Unterbaus 20 mehrere - hier drei - Querstützen 22, 23, 24 angeordnet, die sich in einer Horizontalebene erstreckende oberseitige A b-schnitte aufweisen. Auf den vorderen oberseitigen Abschnitten der Querstücke 22 bis 24 stützt sich der in Fig. 2 vordere Längsträger 13 ab und auf den hinteren - maschinenseitigen - Abschnitten der Querstücke 22 bis 24 liegt der hintere Längsträger 14 auf. Die beiden Längsträger 13, 14 werden durch Auflageplatten 25, 26, 27 auf Abstand gehalten, die bei dem in Fig. 2 dargestellten Ausführungsbe i-spiel auf den mittleren Abschnitten der Querstücke 22 bis 24 äufliegen. Mit ihrer rückseitigen Fläche stützen sich die Querstücke 22, 23, 24 auf der Schrägfläche 21 ab, deren Neigung so gewählt ist, dass sich anfallende Späne nicht absetzen können, sondern abrutschen.

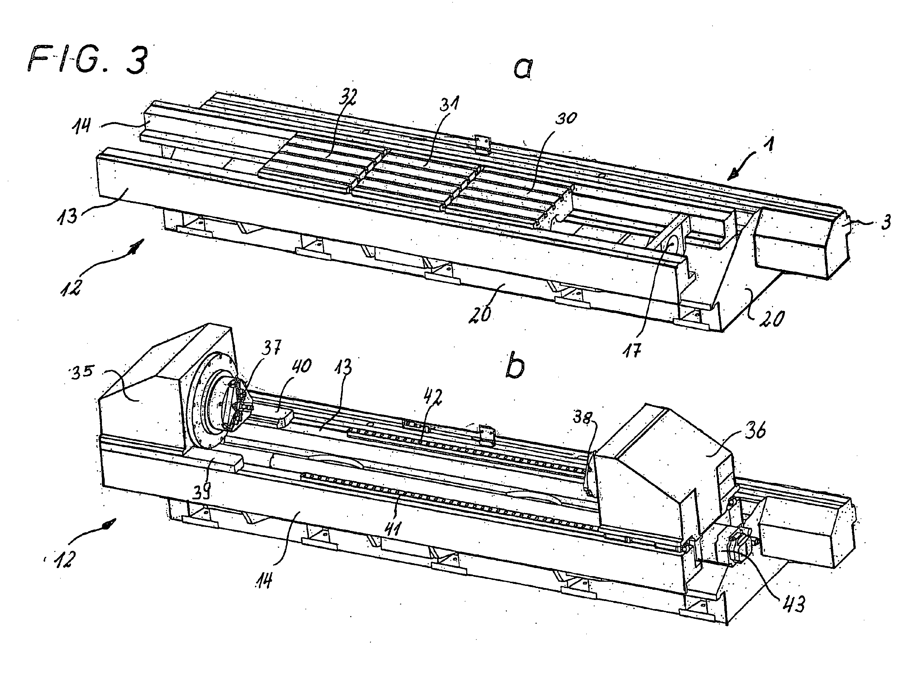

Die in Fig. 3a dargestellte Rahmenkonstruktion entspricht in ihrem technischen Konzept dem Ausführungsbeispiel nach Fig. 1, 2, sodass zur Vermeidung von Wiederholungen auf die dort beschriebenen Einzelheiten nicht näher eingegangen werden. Gleiche Bauteile sind m it gleichen Bezugszeichen gekennzeichnet.

In den Figuren 1 und 2 ist die erfindungsgemäß ausgebildete Tragkonstruktion ohne Werkstückträger gezeigt. Bei der Ausführung nach Fig. 3a sind zwischen den beiden Längsträgern 13, 14 der Tragkonstruktion 12 insgesamt drei Werkstücktische 30, 31, 32 hintereinander angeordnet, die durch - nicht dargestellte - Mittel in Längsrichtung verschoben werden können oder in diesen Positionen fest arr e-tiert sind. Auf den Spannplatten dieser Werkstücktische 30 bis 32 können Werkstücke in üblicher Weise gespannt werden.

Auch bei dem Ausführungsbeispiel nach Fig. 3b ist das in den Figuren 1 und 2 dargestellte und vorstehend beschriebene technische Konzept der Verwendung von zwei zueinander parallelen Längstr ägern 13, 14 verwirklicht. Auf dem von den Längsträgern 13, 14 gebildeten Tragrahmen der in Fig. 3b dargestellten Tragkonstruktion 12 sind zwei Spannvorrichtungen 35, 36 angeordnet, die an ihren zueinander weisenden Stirnseiten jeweils Spannmittel 37, 38 zum Fixieren eines langgestreckten Werkstücks aufweisen. Bei diesem Ausfü h-rungsbeispiel ist die - linke - Spannvorrichtung 35 auf den Oberseiten der Längsträger auf Tragschienen 39, 40 fest montiert. Die in Fig. 3b rechte Spannvorrichtung 36 ist auf zwei Führungsschienen 41, 42 in Längsrichtung verfahrbar, sodass der Abstand zwischen beiden Spannvorrichtungen 35 und 36 eingestellt werden kann. Ein Antriebsaggregat 43 ist mit der Spannvorrichtung 36 kinematisch gekoppelt.

Neben den dargestellten Werkstückträgern, d.h. den Werks tücktischen 30 bis 32 und den Spannvorrichtungen 35, 36, können weitere geeignete Werkstückträger, beispielsweise drehangetriebene Rundt i-sche statt der Werkstücktische 30 bis 32 eingesetzt werden. Wesen t-lich ist, dass der Tragrahmen 12 mit den beiden Längsträgern 13, 14 eine ausreichend hohe Steifigkeit auch bei Verwendung der unterschiedlichen Werkstückträger gewährleistet und dass die Späne sowie die weiteren Betriebsstoffe ohne nachteilige Haufenbildung in den Freiraum zwischen den beiden Längsträgern fallen können.

## Patentansprüche

1. Werkzeugmaschine zur spanenden Bearbeitung von Werkstücken mit
- einem formsteifen Maschinenbett (1), dessen Längsseite sich in Richtung der X-Koordinatenachse erstreckt,
- einem am Maschinenbett in X-Richtung verfahrbaren Fahrständer (4),
- einer am Fahrständer (4) verfahrbar montierten Bearbeitun gseinheit (9, 10) mit mindestens einem Spanwerkzeug und
- einer an der vorderen Längsseite des Maschinenbetts (1) vo r-gesehenen Tragkonstruktion (12) zur Halterung mindestens eines Werkstücks,
**dadurch gekennzeichnet, dass**
- die Tragkonstruktion (12) einen formstabilen Tragrahmen (11) aufweist, dessen in einem Querabstand angeordnete Längstr äger (13, 14) einen Freiraum für den Spänefall begrenzen, und der zur Aufnahme und Montage von unterschiedlichen Werkstückträgern (30, 35, 36) ausgebildet ist.

2. Werkzeugmaschine nach Anspruch 1,
**dadurch gekennzeichnet, dass**
der Tragrahmen (11) auf in Rahmen-Längsrichtung beabstandeten Querstützen (22, 23, 24) abgestützt ist.

3. Werkzeugmaschine nach Anspruch 2,
**dadurch gekennzeichnet, dass**
die Querstützen (22-24) auf einem durchgehenden Unterbau (20) angeordnet sind, der an der vorderen Längsseite des Maschine n-betts (1) vorgesehen ist und eine geneigte obere Rutschfläche für Späne und andere Betriebsstoffe aufweist.

4. Werkzeugmaschine nach einem der vorstehenden Ansprüche,
**dadurch gekennzeichnet, dass**
die Längsträger (13, 14) Tragelemente zur Halterung und Abstützung verschiedenartiger Werkstückaufnahmen tragen.

5. Werkzeugmaschine nach einem der vorstehenden Ansprüche,
**dadurch gekennzeichnet, dass**
der den Tragrahmen (11) abstützende Unterbau (20) am Maschinenbett starr befestigt oder mit diesem einstückig ausgebildet ist.

6. Werkzeugmaschine nach einem der vorstehenden Ansprüche,
**dadurch gekennzeichnet, dass**
als Werkstückaufnahmen mindestens ein Werkstücktisch (30, 31, 32) auf den beiden Längsträgern (13, 14) des Tragrahmens (11) fest oder verfahrbar montiert ist.

7. Werkzeugmaschine nach einem der Ansprüche 1 bis 5,
**dadurch gekennzeichnet, dass**
als Werkstückaufnahme mindestens eine Spannvorrichtung (35, 36) zum Einspannen und Drehen eines Werkstücks auf den be i-den Längsträgern (13, 14) des Tragrahmens (11) ortsfest oder verfahrbar montiert ist.

8. Werkzeugmaschine nach einem der vorstehenden Ansprüche,
**dadurch gekennzeichnet, dass**
als Werkstückaufnahme mindestens eine Spannvorrichtung mit einem drehangetriebenen vertikalen Rundtisch auf den beiden Längsträgern (13, 14) des Tragrahmens (11) in Längsrichtung verfahrbar oder ortsfest montiert ist.

9. Werkzeugmaschine nach einem der Ansprüche 7 oder 8,
**dadurch gekennzeichnet, dass**
der auf den Längsträgern (13, 14) in Führungsschienen verfahrbaren Spannvorrichtung (36) eine Antriebseinheit (43) zugeordnet ist.

10. Werkzeugmaschine nach einem der vorstehenden Ansprüche,
**dadurch gekennzeichnet, dass**
unter dem Tragrahmen ein Sammler für Späne und andere B e-triebsmittel angeordnet ist.

## Claims

1. Machine tool for machining workpieces, which comprises
- a dimensionally stable machine base (1), the longitudinal side of which extends in the direction of the x-axis,
- a traveling stand (4) mounted on the machine base so as to be movable in the x-direction,
- a machining unit (9, 10) movably mounted on the traveling stand (4), which comprises at least one cutting tool, and
- a supporting structure (12) provided on the front longitudinal side of the machine base (1) for fastening at least one workpiece,
**characterized in that**
- the supporting structure (12) has a dimensionally stable supporting frame (11), the transversely spaced longitudinal members (13, 14) of which delimit a free space for the chip fall and which is designed for receiving and mounting different workpiece carriers (30, 35, 36).

2. The machine tool according to claim 1,
**characterized in that**
the supporting frame (11) is supported on transverse supports (22, 23, 24) spaced apart in the longitudinal direction of the frame.

3. The machine tool according to claim 2,
**characterized in that**
the transverse supports (22-24) are arranged on a continuous substructure (20) which is provided at the front longitudinal side of the machine base (1) and has an inclined upper slide surface for chips and other working materials.

4. The machine tool according to one of the preceding claims,
**characterized in that**
the longitudinal members (13, 14) carry supporting members for holding and supporting various workpiece holding fixtures.

5. The machine tool according to one of the preceding claims,
**characterized in that**
the substructure (20) supporting the supporting frame (11) is firmly fixed to the machine base or is integrally formed with the latter.

6. The machine tool according to one of the preceding claims,
**characterized in that**
as workpiece holding fixtures at least one workpiece table (30, 31, 32) is firmly or movably mounted on the two longitudinal members (13, 14) of the supporting frame (11).

7. The machine tool according to one of the claims 1 to 5,
**characterized in that**
as the workpiece holding fixture at least one clamping device (35, 36) for clamping and rotating a workpiece is stationarily or movably mounted on the two longitudinal members (13, 14) of the supporting frame (11).

8. The machine tool according to one of the preceding claims,
**characterized in that**
as the workpiece holding fixture at least one clamping device with a rotationally driven vertical round table is mounted, either movably in longitudinal direction or stationarily, on the two longitudinal members (13, 14) of the supporting frame (11).

9. The machine tool according to one of the claims 7 or 8,
**characterized in that**
a drive unit (43) is associated to the clamping device (36) being movable in guide rails on the longitudinal members (13, 14).

10. The machine tool according to one of the preceding claims,
**characterized in that**
below the supporting frame a collecting container for chips and other working materials is arranged.

## Revendications

1. Machine-outils pour l'usinage de pièces à usiner par copeaux, comprenant
- un banc de machine (1) de forme rigide, dont le flanc longitudinal s'étend dans la direction de l'axe des coordonnées x,
- un support mobile (4) déplaçable dans la direction des x sur le banc de machine,
- une unité d'usinage (9, 10) montée de manière à être déplaçable sur le support mobile (4), comprenant au moins un outil d'usinage de copeaux, et
- une construction support (12), prévue sur le flanc longitudinal avant du banc de machine (1) pour supporter au moins une pièce à usiner,
**caractérisée en ce que**
- la construction support (12) présente un cadre support (11) de forme stable, dont les supports longitudinaux (13, 14), disposés à une certaine distance transversale, délimitent un espace libre pour la chute des copeaux, et qui est configuré pour la réception et le montage de différents porte-pièces (30, 35, 36).

2. Machine-outil selon la revendication 1, **caractérisée en ce que** le cadre support (11) est maintenu sur des montants transversaux (22, 23, 24) situés à intervalles dans le sens longitudinal du cadre.

3. Machine-outil selon la revendication 2, **caractérisée en ce que** les montants transversaux (22 - 24) sont disposés sur un soubassement (20) traversant qui est prévu sur le flanc longitudinal avant du banc de machine (1) et présente une surface de glissement supérieure inclinée pour les copeaux et autres substances d'exploitation.

4. Machine-outil selon l'une des revendications précédentes, **caractérisée en ce que** les supports longitudinaux (13, 14) comportent des éléments porteurs pour le support et le soutien de réceptacles de pièces à usiner de différents types.

5. Machine-outil selon l'une des revendications précédentes, **caractérisée en ce que** le soubassement (20) soutenant le cadre support (11) est fixé de manière inamovible au banc de machine ou est conçu sous une forme monobloc avec celui-ci.

6. Machine-outil selon l'une des revendications précédentes, **caractérisée en ce qu'**au moins une table porte-pièce (30, 31, 32) est montée de manière fixe ou mobile sur les deux supports longitudinaux (13, 14) du cadre support (11) à titre de réceptacles pour pièces à usiner.

7. Machine-outil selon l'une des revendications 1 à 5, **caractérisée en ce qu'**au moins un dispositif de serrage (35, 36) pour serrer et faire tourner une pièce à usiner est monté de manière fixe ou mobile sur les deux supports longitudinaux (13, 14) du cadre support (11) à titre de réceptacle pour pièces à usiner.

8. Machine-outil selon l'une des revendications précédentes, **caractérisée en ce qu'**au moins un dispositif de serrage ayant une table circulaire verticale entraînée en rotation est monté de manière fixe ou mobile dans le sens longitudinal sur les deux supports longitudinaux (13, 14) du cadre support (11) à titre de réceptacle pour pièces à usiner.

9. Machine-outil selon l'une des revendications 7 ou 8, **caractérisée en ce qu'**une unité d'entraînement (43) est affectée au dispositif de serrage (36) déplaçable dans des rails de guidage sur les supports longitudinaux (13, 14).

10. Machine-outil selon l'une des revendications précédentes, **caractérisée en ce qu'**un collecteur pour les copeaux et autres substances d'exploitation est disposé sous le cadre support.
